# EUROPEAN PATENT APPLICATION

(11) **EP 4 826 852 A1**
(43) Date of publication of application: **21.10.2026**
(21) Application number: 23961485.2
(22) Date of filing: 14.12.2023
(51) Int. Cl.: H01M 10/6557, H01M 10/613, H01M 10/617, H01M 10/647, H01M 10/651, H01M 10/6563

(54) **BATTERY PACK**

(71) Applicant: Vehicle Energy Japan Inc., Hitachinaka-shi, Ibaraki 312-8505 (JP)
(72) Inventor: MATSUMOTO, Takehiro, Hitachinaka-shi, Ibaraki 312-8505 (JP); KUBOTA, Osamu, Hitachinaka-shi, Ibaraki 312-8505 (JP)
(74) Representative: Mewburn Ellis LLP
(86) International application number: PCT/JP2023/044842
(87) International publication number: WO 2025/126420

(57) **Abstract**

An assembled battery includes a holding member configured to hold a plurality of batteries, a stacked battery in which the plurality of batteries are stacked in a stacking direction via the holding member, and a ventilation path adjacent to the stacked battery, extending in the stacking direction, and forming a flow path of cooling wind for cooling the plurality of batteries. The ventilation path includes an air intake port for taking the cooling wind into the ventilation path. The holding member includes a ventilation hole opened to the ventilation path side and a side opposite to the ventilation path to cause the cooling wind to flow from the ventilation path to the stacked battery. The ventilation hole includes a bottom surface ventilation hole opened toward spaces formed between bottom surfaces of the plurality of batteries and a bottom surface of the holding member.

## Description

### [Technical Field]

The present invention relates to an assembled battery.

### [Background Art]

In recent years, there has been a demand for a large-capacity and high-power secondary battery as a power source for an electric vehicle (EV) or a hybrid electric vehicle (HEV) that is partially assisted by a motor to drive. The secondary battery is, for example, a lithium ion secondary battery. A plurality of secondary batteries are connected in series to be a module and a plurality of modules are connected in series or in parallel to be packed and used.

The secondary battery generates heat by itself because of, for example, the electric resistance of a constituent substance inside the secondary battery when charging or discharging is performed. A temperature rise due to the self-heat generation accelerates deterioration and reduces the life of the secondary battery. For that reason, the secondary battery needs to be appropriately cooled. Thus, as a battery pack, as disclosed in Patent Literatures 1 to 3, structure in which a flow path of a coolant such as air or water is provided on the inside to cool the secondary battery is generally adopted.

### [Citation List]

### [Patent Literature]

[Patent Literature 1] Japanese Patent Application No. 2010-153141
[Patent Literature 2] Japanese Patent Application No. 2015-005362
[Patent Literature 3] Japanese Patent Application No. 2019-131026

### [Summary of Invention]

### [Technical Problem]

However, there is room for improvement in the flow path structure of the coolant and there is a demand for further improving cooling efficiency of a battery.

### [Solution to Problem]

In an aspect of an embodiment of the present invention, there is provided an assembled battery including: a holding member configured to hold a plurality of batteries; a stacked battery in which the plurality of batteries are stacked in a stacking direction via the holding member; a ventilation path adjacent to the stacked battery, extending in the stacking direction, and forming a flow path of cooling wind for cooling the plurality of batteries; and an enclosure configured to house the stacked battery and the ventilation path, wherein the ventilation path includes: an air intake port for taking the cooling wind into the ventilation path; and an exhaust port for discharging the cooling wind that has cooled the plurality of batteries, the holding member includes a ventilation hole opened to the ventilation path side and a side opposite to the ventilation path to cause the cooling wind to flow from the ventilation path to the stacked battery, and the ventilation hole includes a bottom surface ventilation hole opened toward spaces formed between bottom surfaces of the plurality of batteries and a bottom surface of the holding member.

### [Advantageous Effect of Invention]

According to the embodiment of the present invention, in the assembled battery, it is possible to further improve cooling efficiency of the batteries.

### [Brief Description of Drawings]

[Figure 1] Figure 1 is a perspective view illustrating a battery pack in a first embodiment;
[Figure 2] Figure 2 is a plan view illustrating battery modules and a main ventilation path of the battery pack in the first embodiment;
[Figure 3] Figure 3 is a perspective view illustrating the battery modules and the main ventilation path of the battery pack in the first embodiment;
[Figure 4] Figure 4 is a perspective view illustrating a configuration example of a battery holder that holds batteries inside the battery pack in the first embodiment;
[Figure 5] Figure 5 is a perspective view illustrating the configuration example of the battery holder that holds the batteries inside the battery pack in the first embodiment;
[Figure 6] Figure 6 is a perspective view illustrating coupling of a plurality of battery holders in the first embodiment;
[Figure 7] Figure 7 is a side view illustrating the coupling of the plurality of battery holders in the first embodiment;
[Figure 8] Figure 8 is a side view illustrating ventilation holes formed by coupling the battery holders in the first embodiment;
[Figure 9] Figure 9 is a perspective view illustrating definitions of a cross section of the ventilation holes of the battery holder and a cross section of the main ventilation path in the first embodiment;
[Figure 10] Figure 10 is an A-A sectional view of Figure 9;
[Figure 11] Figure 11 is a B-B sectional view of Figure 9;
[Figure 12] Figure 12 is a sectional view taken along a B-B line of the battery holder in the first embodiment;
[Figure 13] Figure 13 shows comparative diagrams of simulation results of temperature distributions in battery modules in the related art (without a condition of a cross-sectional area ratio) and the first embodiment (with a restriction of a cross-sectional area ratio);
[Figure 14] Figure 14 is a perspective view illustrating a battery module and a main ventilation path of a battery pack in a second embodiment;
[Figure 15] Figure 15 is a diagram for explaining, for a configuration of the same battery pack as the battery pack in the second embodiment, a temperature distribution in a battery module without a rule of a cross-sectional area ratio;
[Figure 16] Figure 16 is a perspective view illustrating a battery module and a main ventilation path of a battery pack in a third embodiment;
[Figure 17] Figure 17 is a diagram for explaining, for a configuration of the same battery pack as the battery pack in the third embodiment, a temperature distribution in a battery module without a rule of a cross-sectional area ratio;
[Figure 18] Figure 18 is a perspective view illustrating battery modules and a main ventilation path of a battery pack in a fourth embodiment; and
[Figure 19] Figure 19 is a perspective view illustrating the battery modules and the main ventilation path of the battery pack in the fourth embodiment (a state in which the battery modules and the main ventilation path in an upper stage are removed).

### [Description of Embodiments]

Respective embodiments of the present invention will be explained with reference to the drawing. In order to facilitate understanding of the respective embodiments, in the drawings, sizes and ratios of constituent members are exaggerated or simplified in some cases. In the explanation of the respective embodiments, the same reference numerals and signs are given to the same components and redundant explanation of the components is omitted. In the respective embodiments, when the same plurality of components are respectively distinguished, the components will be explained with suffixes added to the same reference numerals and signs and, when the same plurality of components are not distinguished, the components will be explained using the same reference numerals and signs excluding the suffixes.

In the explanation of the respective embodiments, a positive-oriented XYZ orthogonal coordinate system including an X axis, a Y axis, and a Z axis as coordinate axes is used. Arrows of the X axis, the Y axis, and the Z axis indicate a positive direction of the coordinate axes. The X axis is a coordinate axis in the width direction of batteries. The Y axis is a coordinate axis in a stacking direction of the batteries. The Z axis is a coordinate axis in the height direction of the batteries. A plane formed by the X axis and the Y axis is referred to as XY plane, a plane formed by the Y axis and the Z axis is referred to as YZ plane, and a plane formed by the X axis and the Z axis is referred to as XZ plane. However, in the XYZ orthogonal coordinate system, a relative positional relation is only represented.

### [First Embodiment]

### (Overview of a battery pack 1 in a first embodiment)

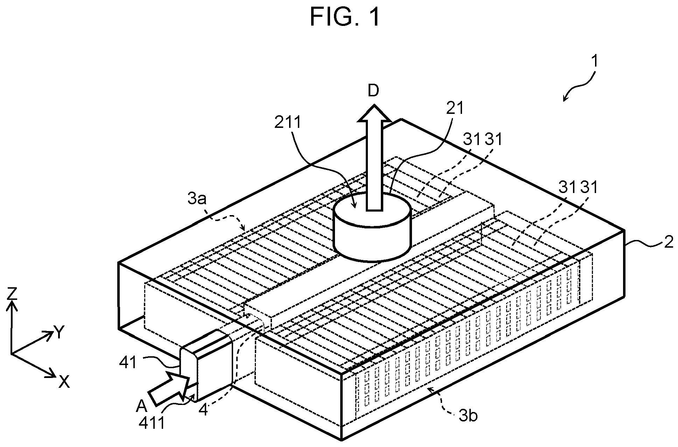

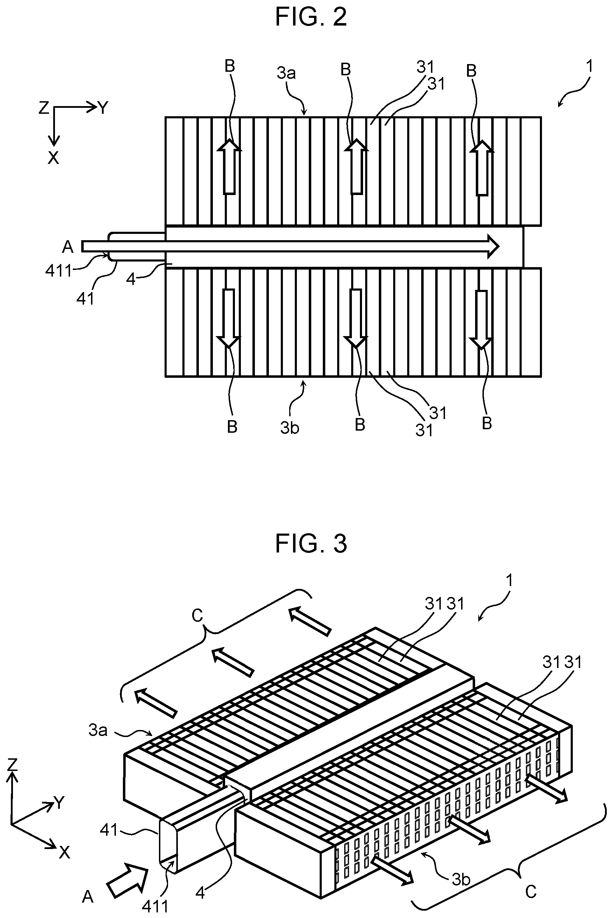

Figure 1 is a perspective view illustrating a battery pack 1 in a first embodiment. Figure 1 schematically illustrates the battery pack 1 in a state in which battery modules 3 and a main ventilation path 4 are housed in a battery enclosure 2. Figure 2 is a plan view illustrating the battery modules 3 and the main ventilation path 4 of the battery pack 1 in the first embodiment. Figure 3 is a perspective view illustrating the battery modules 3 and the main ventilation path 4 of the battery pack 1 in the first embodiment. The battery pack 1 is mounted, as a power supply source, on various vehicles using electric power as driving energy, such as an electric vehicle and a hybrid electric vehicle.

The battery pack 1 is an assembled battery including a hollow battery enclosure 2, two battery modules (stacked batteries) 3a and 3b, and the main ventilation path 4. The material of the battery enclosure 2 may be any material to the extent that the material satisfies required specifications such as strength, durability, and processability. The number of battery modules 3 housed in the battery enclosure 2 is not limited to two.

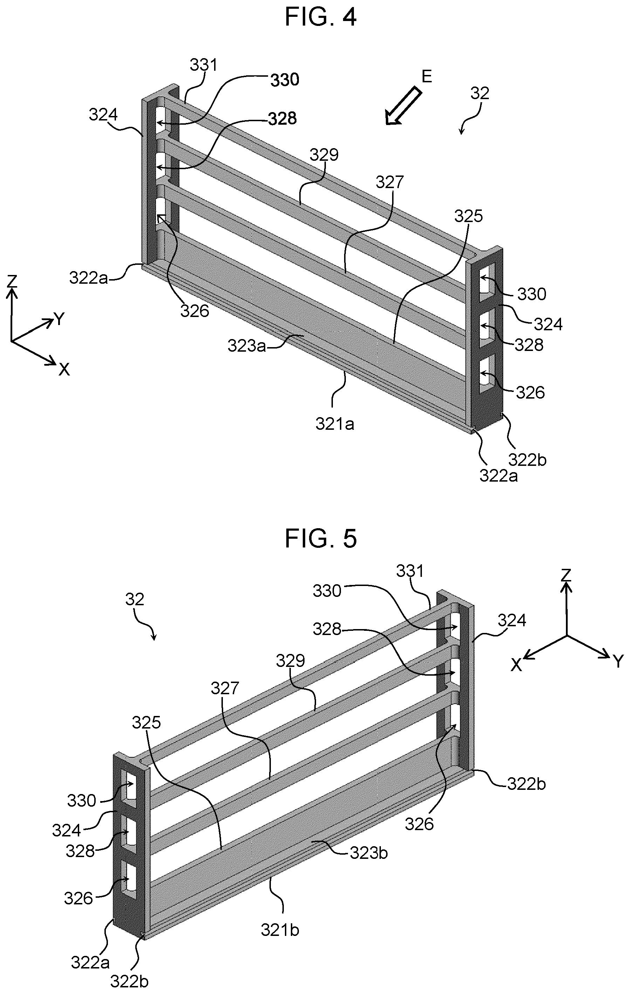

The battery module (the stacked battery) 3 is a stacked battery in which a plurality of batteries 31 are stacked in the Y-axis direction (a stacking direction) via each of a plurality of battery holders 32 (explained below with reference to Figures 4 to 6). The battery 31 is a winding type secondary battery in which a battery wound group is housed in a battery can made of metal. A battery module 3a is disposed on the X-axis negative direction side of the main ventilation path 4. A battery module 3b is disposed on the X-axis positive direction side of the main ventilation path 4.

The main ventilation path 4 is adjacent to the battery module 3. The main ventilation path 4 extends along the Y-axis and constitutes a ventilation path of cooling air for cooling the batteries 31 in the battery enclosure 2. The main ventilation path 4 can be formed by attaching plate-like members to the battery modules 3a and 3b to close, from both the direction side of the Z axis, a gap between the battery modules 3a and 3b at the time when, for example, the battery modules 3a and 3b are disposed side by side in the X-axis direction. The main ventilation path 4 includes an air intake duct 41 on the Y-axis negative direction side. The air intake duct 41 includes an air intake port 411 opened to the Y-axis negative direction side.

The air intake duct 41, the main ventilation path 4, and an exhaust duct 21 constitutes a ventilation path forming a flow path of cooling air for cooling the batteries 31. That is, the ventilation path includes an air intake port 411 for taking the cooling air into the ventilation path and an exhaust port 421 for discharging the cooling air that has cooled the batteries 31.

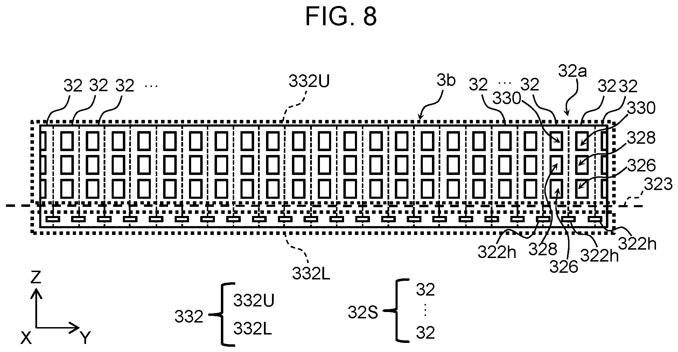

For example, the cooling air, which is a coolant for cooling the batteries 31, is taken into the main ventilation path 4 from the air intake port 411 via the air intake duct 41 as indicated by an arrow A (Figure 1). As indicated by an arrow B (Figure 2), the cooling air finely branches via ventilation hole groups 332 (Figure 8) provided on the main ventilation path 4 side of the battery modules 3a and 3b and flows from the main ventilation path 4 to the battery modules 3a and 3b sides.

Further, as indicated by an arrow C (Figure 3), the cooling air flows in a direction away from the battery modules 3a and 3b via the ventilation hole groups 332 (Figure 8) provided on the side opposite to the main ventilation path 4 of the battery modules 3a and 3b. Finally, the cooling air collides with the inner wall of the battery enclosure 2 of the battery pack 1 and changes a route and, as indicated by an arrow D (Figure 1), is discharged toward the Z-axis positive direction from an exhaust port 221 of the exhaust duct 21 provided on the Z-axis positive direction side of the battery enclosure 2.

Note that the battery pack 1 may not include the battery enclosure 2 and an exhaust port 211. In this case, the cooling air forms a flow path in which the cooling air is caused to flow between the air intake port 411 and ventilation holes (first ventilation holes 322a, second ventilation holes 322b, third ventilation holes 326, fourth ventilation holes 328, fifth ventilation holes 330, and the like).

### (Configuration example of the battery holder 32)

Figures 4 and 5 are perspective views illustrating a configuration example of the battery holder 32 that holds the batteries 31 inside the battery pack 1 in the first embodiment. Figure 5 is a perspective view in which the battery holder 32 illustrated in Figure 4 is viewed from an arrow E. The material of the battery holder 32 may be any material to the extent that the material satisfies required specifications such as strength, durability, and processability. The battery holder 32 is an individual holding member that holds the batteries 31.

As illustrated in Figures 4 and 5, the battery holder 32 includes a first bottom surface section 321a and a second bottom surface section 321b. The battery holder 32 includes the first ventilation holes 322a and the second ventilation holes 322b. The battery holder 32 includes a first support stand 323a, a second support stand 323b, column sections 324, a first beam section 325, the third ventilation holes 326, a second beam section 327, the fourth ventilation holes 328, a third beam section 329, the fifth ventilation holes 330, and a fourth beam section 331.

The battery holder 32 has structure symmetrical with respect to an imaginary plane parallel to the XZ plane including the first beam section 325, the second beam section 327, the third beam section 329, and the fourth beam section 331.

The first bottom surface section 321a is located on the Z-axis negative direction side most of the battery holder 32 and constitutes the bottom surface (the surface on the Z-axis negative direction side) of the battery module 3 in which the batteries 31 are stacked in a state of being held by the battery holder 32. When the battery holder 32 is coupled to another battery holder 32 in the Y-axis direction, the first bottom surface section 321a constitutes the bottom surface of the battery module 3 in conjunction with the second bottom surface section 321b of the other battery holder 32.

When the batteries 31 are held by the battery holder 32, the first support stand 323a comes into contact with the bottom surfaces (the surfaces on the Z-axis negative direction side) of the batteries 31 and supports the batteries 31. When the battery holder 32 is coupled to another battery holder 32 in the Y-axis direction, the first support stand 323a constitutes a support surface for the batteries 31 in conjunction with the second support stand 323b of the other battery holder 32.

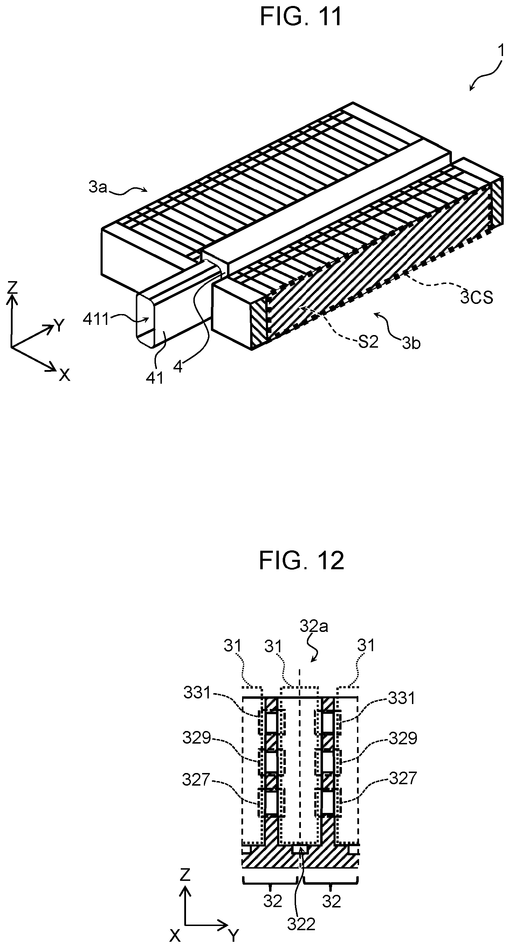

In XY plane view, the first support stand 323a is narrower in the Y-axis direction compared with the first bottom surface section 321a. In XY plane view, the second support stand 323b is narrower in the width in the Y-axis direction to the same degree as the first support stand 323a compared with the second bottom surface section 321b. Thus, when the batteries 31 are supported by the first support stand 323a and the second support stand 323b, a noncontact area not in contact with the first support stand 323a and the second support stand 323b is formed on the bottom surfaces of the batteries 31. The noncontact area of the bottom surfaces of the batteries 31 faces the first bottom surface section 321a and the second bottom surface section 321b and forms a flow path 322 (Figure 12) of cooling air for directly cooling the bottom surfaces of the batteries 31.

The column sections 324 each extend in the perpendicular direction (the Z-axis positive direction) from both the end sides in the X-axis direction of the first bottom surface section 321a and the second bottom surface section 321b. The first beam section 325 crosses between the two column sections 324 while standing in the Z-axis positive direction with respect to the first support stand 323a and the second support stand 323b.

The third ventilation holes 326 are provided in the middles between positions to which the first beam section 325 is connected and positions to which the second beam section 327 is connected in the two column sections 324.

The second beam section 327 crosses between the two column sections 324 at the middle positions between the third ventilation holes 326 and the fourth ventilation holes 328 of the two column sections 324.

The fourth ventilation holes 328 are provided in the middles of positions to which the second beam section 327 is connected and positions to the third beam section 329 is connected in the two column sections 324.

The third beam section 329 crosses between the two column sections 324 at middle positions between the fourth ventilation holes 328 and the fifth ventilation holes 330 of the two column sections 324.

The fifth ventilation holes 330 are provided at middle positions between positions to which the third beam section 329 is connected and positions to which the fourth beam section 331 is connected in the two column sections 324.

The fourth beam section 331 crosses between the two column sections 324 at positions above (in the Z-axis positive direction of) the fifth ventilation holes 330 of the two column sections 324.

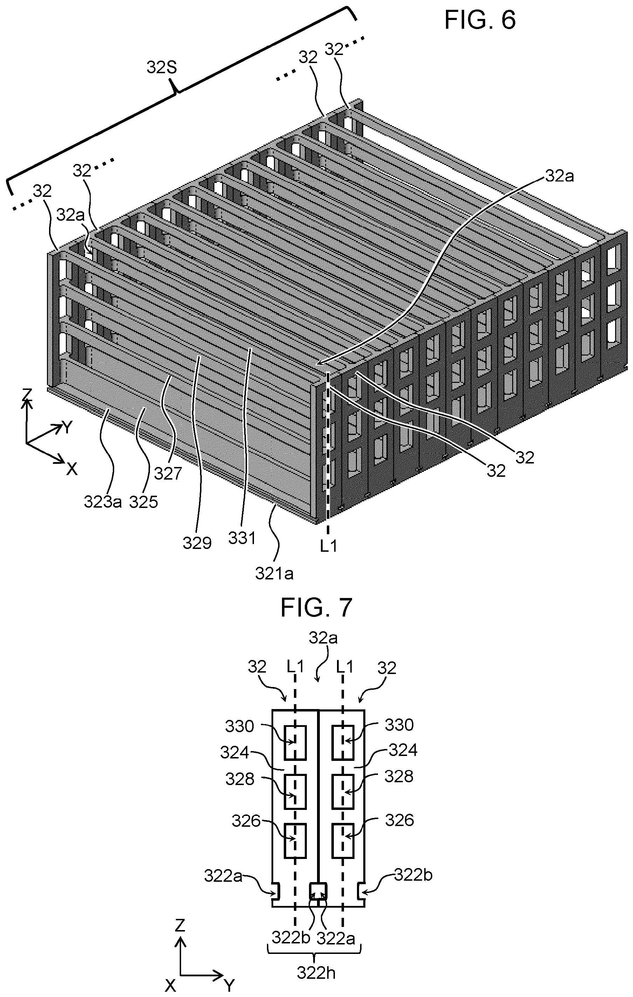

Figure 6 is a perspective view illustrating coupling of the plurality of battery holders 32 in the first embodiment. Figure 7 is a side view illustrating the coupling of the plurality of battery holders 32 in the first embodiment. Figure 8 is a side view illustrating the ventilation hole groups 332 formed by coupling the battery holders 32 in the first embodiment. Figures 6, 7, and 8 are exemplifications and illustration thereof is simplified as appropriate.

As illustrated in Figure 6, the plurality of battery holders 32 are coupled in the Y-axis direction, whereby a holding space 32a for holding the batteries 31 one by one is formed between two battery holders 32 adjacent to each other. The bottom surface of the holding space 32a for holding the batteries 31 is formed by one first support stand 323a and the other second support stand 323b of the adjacent two battery holders 32 facing each other. The holding space 32a is divided from the holding space 32a adjacent thereto by the first beam section 325, the second beam section 327, the third beam section 329, and the fourth beam section 331.

The battery holder 32 includes the first beam section 325, the second beam section 327, the third beam section 329, and the fourth beam section 331 in an imaginary plane parallel to the XZ plane including a broken line L1 parallel to the Z axis illustrated in FIS. 6 and 7. Thus, one holding space 32a causes the cooling air to flow in and flow out via the third ventilation hole 326, the fourth ventilation hole 328, and the fifth ventilation hole 330 of each of the adjacent two battery holders 32. In other words, one battery holder 32 causes the cooling air to flow in and flow out from the adjacent two holding spaces 32a via the third ventilation hole 326, the fourth ventilation hole 328, and the fifth ventilation hole 330.

When the two battery holders 32 are coupled, as illustrated in Figure 7, the first ventilation hole 322a of one battery holder 32 and the second ventilation hole 322b of the other battery holder 32 are in contact in opposite directions each other in the stacking direction of the batteries 31 in the YZ plane view. At this time, the two battery holders 32 form bottom surface ventilation holes 322h. The bottom surface ventilation holes 322h are formed one by one at each of the both ends in the X-axis direction of the adjacent battery holders 32.

The bottom surface ventilation hole 322h is opened toward a space formed between the bottom surface of the battery 31 and the first bottom surface section 321a and the second bottom surface section 321b of the holding member the battery holder 32). Thus, the bottom surface ventilation holes 322h at both the ends in the X-axis direction of the adjacent battery holders 32 are connected by the flow path 322 (Figure 12).

As explained above, a holding member 32S that holds the batteries 31 inside the battery pack 1 in the first embodiment is configured by coupling a plurality of individual holding members (the battery holders 32), each of which holds the plurality of batteries 31. In this configuration, for example, the first ventilation holes 322a and the second ventilation holes 322b constituting the bottom surface ventilation holes 322h can be formed as notches that are cut in forms facing each other in the stacking direction of the batteries 31 (for example, the Y-axis positive direction) and the opposite direction of the stacking direction (for example, the Y-axis negative direction). In other words, the battery holder 32 includes a recess on the end face in the stacking direction (the Y-axis direction). The recess is a space formed between the first bottom surface section 321a and the first support stand 323a in the X-axis direction of the battery holder 32 from end to end in cross-sectional view of the battery holder 32 on the YZ plane. The bottom surface ventilation hole 322h is formed such that a recess formed in one battery holder 32 and a recess formed in the other battery holder 32 adjacent in the stacking direction of the battery holders 32 face each other. Thus, there is an advantage that precision machining for formation of the bottom surface ventilation hole 322h is facilitated.

However, how the holding member of the battery 31 is constructed is not limited to the way in which the battery holders 32, each of which holds the plurality of batteries 31, are coupled. The holding member may be constructed in any way to the extent that the holding member can include the ventilation holes including the first ventilation holes 322a and the second ventilation holes 322b and the flow path 322 (Figure 12).

Figure 8 is a side view in which the battery module 3b is viewed from the X-axis positive direction.

As illustrated in Figure 8, the battery module 3b includes a bottom surface ventilation hole group 332L below and a main surface ventilation hole group 332U above a height position in the Z-axis direction of support stands 323 (the first support stand 323a and the second support stand 323b). The bottom surface ventilation hole group 332L includes a plurality of bottom surface ventilation holes 322h. The main surface ventilation hole group 332U includes the plurality of third ventilation holes 326, the plurality of fourth ventilation holes 328, and the plurality of fifth ventilation holes 330. The bottom surface ventilation hole group 332L and the main surface ventilation hole group 332U are collectively referred to as ventilation hole groups 332.

The bottom surface ventilation hole group 332L causes cooling air for directly cooling the bottom surfaces of the batteries 31 held by the holding space 32a to flow in from the main ventilation path 4 side in the X-axis direction and discharges the cooling air from the opposite side of the main ventilation path 4.

The main surface ventilation hole group 332U causes cooling air for directly cooling the main surfaces of the batteries 31 to flow in from the main ventilation path 4 side in the X-axis direction toward spaces among the main surfaces of the batteries 31 held by the holding space 32a and stacked and discharges the cooling air from the opposite side of the main ventilation path 4. The main surfaces of the batteries 31 are surfaces of the batteries 31 that face each other when the batteries 31 are stacked.

The main surface ventilation hole group 332U (the third ventilation holes 326, the fourth ventilation holes 328, and the fifth ventilation holes 330) of the battery holder 32 are provided, for example, at equal intervals in the column sections 324.

The third ventilation holes 326 mainly aim at heat radiation measures in a lower part of the battery 31, lashing strength reinforcement of the battery 31, and size adjustment such that a cross-sectional area radio of Expression (1) described below is satisfied. That is, at a design stage, after sizes of the bottom surface ventilation holes 322h (the first ventilation holes 322a and the second ventilation holes 322b), the fourth ventilation holes 328, and the fifth ventilation holes 330 are determined, a size of the third ventilation holes 326 is adjusted to satisfy the cross-sectional area ratio of Expression (1).

The fourth ventilation holes 328 mainly aim at heat generation measures for a wound group on the inside of the battery 31. The fourth ventilation holes 328 are provided such that the center of the ventilation hole is near the center of winding of the battery 31.

The fifth ventilation holes 330 mainly aim at heat generation measures for a bus bar of the battery pack 1 and a battery terminal section. The third ventilation holes 326 are provided at a higher position in the Z-axis positive direction within an allowable range of the strength of the battery holder 32.

Note that Figure 8 illustrates the ventilation hole groups 332 on the side surface on the X-axis positive direction side of the battery module 3b. However, the ventilation hole groups 332 are also provided on the side surface on the X-axis negative direction side (the main ventilation path 4 side) of the battery module 3b and the side surfaces on both-direction sides of the X axis of the battery module 3b.

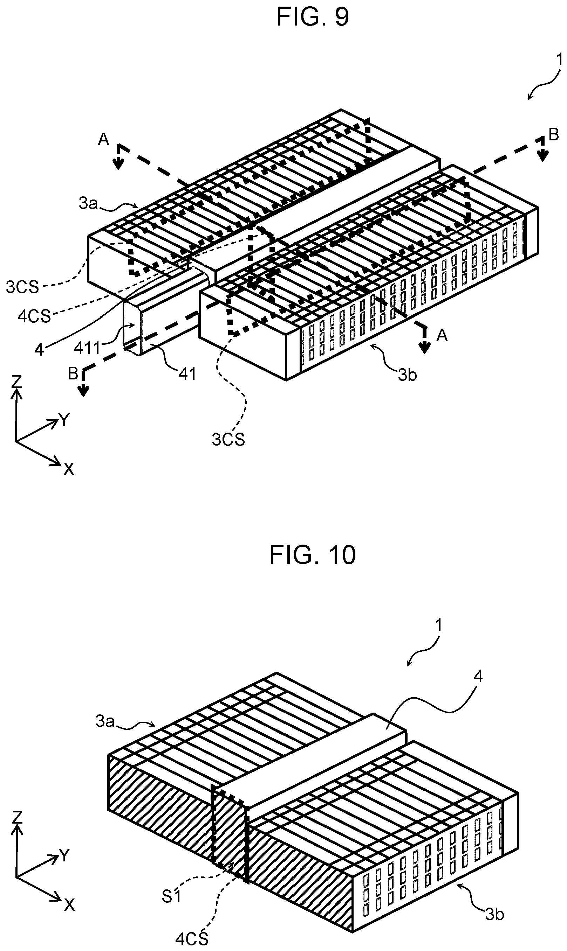

Figure 9 is a perspective view illustrating definitions of a cross section 3CS of the ventilation hole groups 332 and a cross section 4CS of the main ventilation path 4 in the first embodiment. Figure 10 is an A-A cross-sectional view of Figure 9. Figure 11 is a B-B cross-sectional view of Figure 9. Figure 12 is a cross-sectional view taken along a B-B line (Figure 9) of the battery holder 32 in the first embodiment and is an enlarged view of the cross section 3CS of the battery module 3b illustrated in Figure 11. Figures 9, 10, 11, and 12 are exemplifications and illustration thereof is simplified as appropriate.

The cross section 4CS of the main ventilation path 4 taken along an A-A line (Figure 9) parallel to the X axis is defined as illustrated in Figure 10. The cross section 3CS of the battery module 3b taken along a B-B line (Figure 9) parallel to the Y axis is defined as illustrated in Figure 11.

An opening area S2 of the battery module 3b is defined as a sum of opening areas of the ventilation hole groups 332 (the bottom surface ventilation hole group 332L and the main surface ventilation hole group 332U) included in the cross section 3CS. This opening area is a cross-sectional area of a space of the battery holder 32 obtained by subtracting a cross-sectional area closed by the batteries 31 from an opening area of the third ventilation holes 326, the fourth ventilation holes 328, and the fifth ventilation holes 330 in the YZ plane view. The cross section 3CS and the opening area S2 of the battery module 3a are defined the same as those of the battery module 3b.

At this time, a relation of a cross-sectional area ratio indicating that the cross-sectional area S1 of the main ventilation path 4 is larger than a sum (S2+S2) of the opening areas S2 of the battery modules 3a and 3b holds. That is, a condition of Expression (1) described below holds.$S 1 > 2 \times S 2$ (1)

Hole dimensions of the main surface ventilation hole group 332U and the bottom surface ventilation hole group 332L are optimized and determined to satisfy required specifications such as strength, durability, and processability according to specifications and materials of the battery module 3 including the batteries 31 and the battery holders 32, the main ventilation path 4, and the battery holders 32.

### (Effects of the first embodiment (concerning a cross-sectional area ratio))

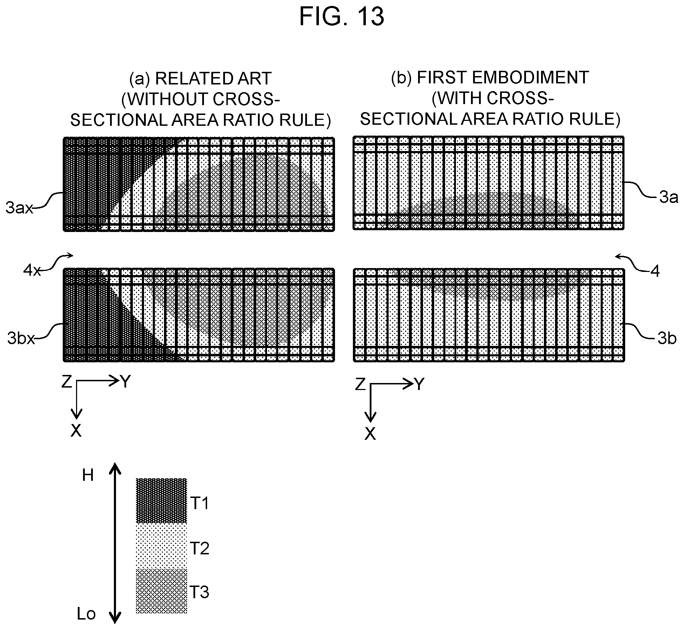

Figure 13 shows comparison diagrams of simulation results of temperature distributions in battery modules of the related art (without a condition of a cross-sectional area ratio) and the first embodiment (with a restriction of a cross-sectional area ratio). Figure 13 schematically indicates, in three stages of relative high temperature T1, medium temperature T2, and low temperature T3, the temperature distributions of the battery modules in the XY plan view of the battery modules and the main ventilation path. Execution conditions of simulations are the same in the related art and the first embodiment. In Figure 13, the Y-axis negative direction sides of main ventilation paths 4x and 4 are air intake ports.

In battery modules 3ax and 3bx and the main ventilation path 4x of the related art, as illustrated in Figure 13 (a), the high temperature T1 was distributed near an air intake port and the medium temperature T2 and the low temperature T3 were distributed away from the air intake port.

On the other hand, in the battery modules 3a and 3b and the main ventilation path 4x in the first embodiment, as illustrated in Figure 13 (b), almost no high temperature T1 was distributed, the medium temperature T2 was dominantly distributed regardless of the distance from the air intake port, and the low temperature T3 was only slightly distributed near the main ventilation path 4. A standard deviation of the temperatures of the batteries 31 in the first embodiment is approximately one third compared with the related art illustrated in Figure 13 (a).

That is, in the battery module 3 in the first embodiment, by observing the cross-sectional area ratio of Expression (1) described above, a distribution amount of the cooling air from the main ventilation path 4 to the main surface ventilation hole group 332U and the bottom surface ventilation hole group 332L were generally equal regardless of the distance from the air intake port. Since the cooling air equally reaches the batteries 31, as a result, variation of the temperatures of the batteries 31 was small. Since the variation of the temperatures of the batteries 31 is small, there are effects that deterioration in a battery is suppressed and a battery life is extended.

### (Effects of the first embodiment (concerning the bottom surface ventilation hole group 332L))

In the related art, the main surface of the battery is directly cooled by the cooling air and the bottom surface of the battery is indirectly cooled by heat conduction. In this way, a coolable surface of the battery is often limited because of restrictions such as a size, production cost, and safety of a battery pack. However, in the case of an air cooling system in which the cooling air is used, its low thermal conductivity causes a problem of cooling efficiency and, moreover, if the location where the battery pack is placed is thermally unstable, heat radiation from the bottom surface of the battery cannot be expected and cooling efficiency deteriorates.

For this problem, in the battery pack 1 in the first embodiment, by providing the bottom surface ventilation hole group 332L in addition to the main surface ventilation hole group 332U, it is possible to directly cool the bottom surface of the battery 31 in the same manner as the main surface with the cooling air and obtain stable cooling efficiency. In particular, when heat radiation by heat conduction via the bottom surface of the battery pack cannot be expected, even a small amount of an air flow of the cooling air to the bottom surface of the battery pack produces a large cooling effect. By causing the cooling air to flow to substantially the entire surface of the battery 31, for example, the battery pack disposed in a vehicle is stably cooled without being significantly affected by heat from other in-vehicle components.

As a result of the simulation, in the first embodiment, compared with the related art, by providing the bottom surface ventilation hole group 332L in addition to the main surface ventilation hole group 332U, a temperature rise of the batteries 31 was successfully reduced approximately 2% to 4% in the entire battery pack 1.

Compared with the related art for cooling the bottom surface of the battery with heat conduction, in the first embodiment, since a heat conduction sheet and the like can be reduced, it is possible to reduce manufacturing cost and manufacturing manhour of the battery pack 1.

### [Second Embodiment]

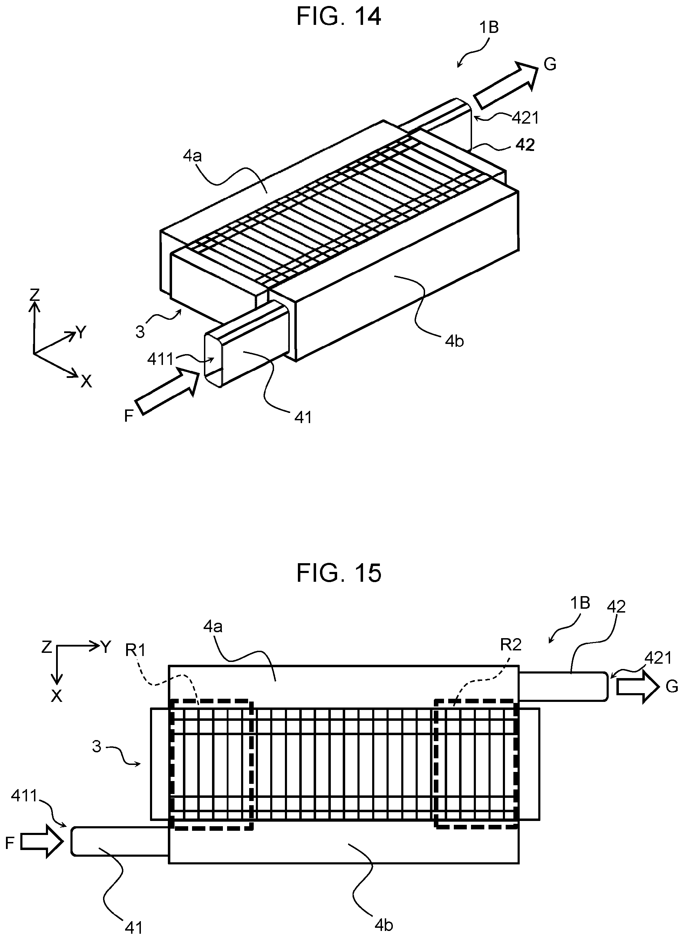

Figure 14 is a perspective view illustrating the battery module 3 and main ventilation paths 4a and 4b inside a battery pack 1B in a second embodiment. As illustrated in Figure 14, in the battery pack 1B, a configuration in which two main ventilation paths 4a and 4b are disposed on both sides in the X-axis direction with respect to one battery module 3 is adopted. Cooling air is taken into the main ventilation path 4b from the air intake port 411 of the air intake duct 41 in a direction of an arrow F (Figure 14) and discharged, through the same flow path in the battery module 3 as the flow path in the first embodiment, in a direction of an arrow G (Figure 14) from the exhaust port 421 of an exhaust duct 42 of the main ventilation path 4a.

Figure 15 is a diagram for explaining, for the same configuration of the battery pack as the configuration in the second embodiment, a temperature distribution in a battery module without a rule of a cross-sectional area ratio. Execution conditions of a simulation are the same as those in the first embodiment.

In the configuration of the battery pack 1B, when the cross-sectional area ratio of Expression (1) described above is not observed, as illustrated in Figure 15, the temperature of the batteries 31 in an area R1 near the air intake duct 41 was relatively high and the temperature of the batteries 31 in an area R2 near the exhaust duct 42 was relatively low.

On the other hand, in the configuration of the battery pack 1B, by providing the bottom surface ventilation holes 322h and observing the cross-sectional area ratio of Expression (1) described above, as in the battery pack 1 in the first embodiment, it is possible to more efficiently cool the batteries 31 and variation of the temperatures of the batteries 31 is reduced.

Note that a battery pack having a configuration in which the two main ventilation paths 4a and 4b are interchanged in the configuration of the battery pack 1B is also the same as the battery pack 1B.

### [Third Embodiment]

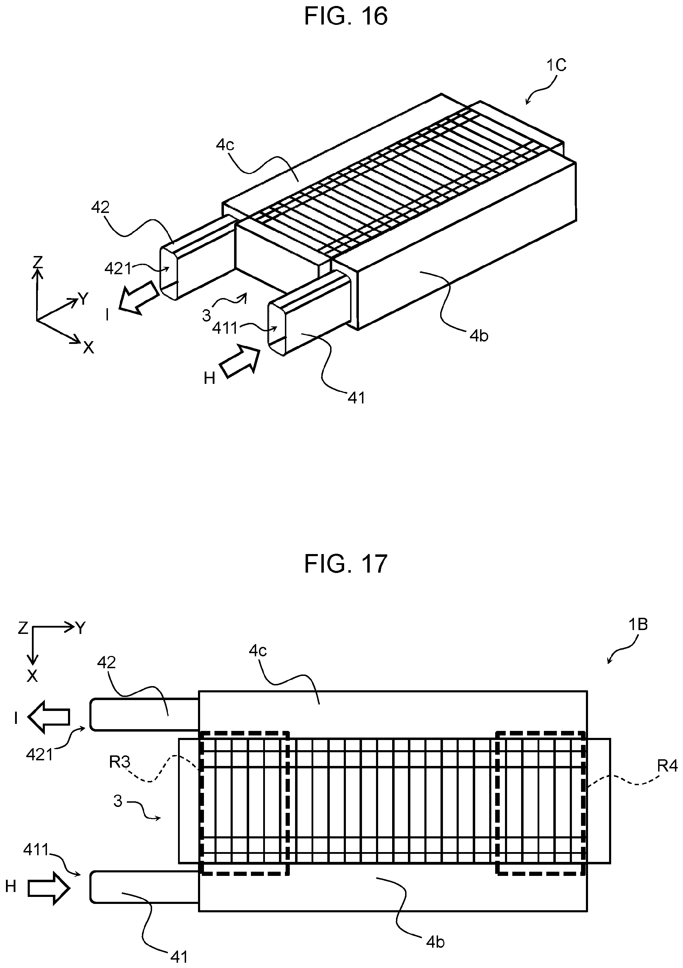

Figure 16 is a perspective view illustrating the battery module 3 and main ventilation paths 4a and 4c inside a battery pack 1C in a third embodiment. As illustrated in Figure 16, in the battery pack 1C, a configuration in which two main ventilation paths 4b and 4c are disposed on both sides in the X-axis direction with respect to one battery module 3 is adopted. In the main ventilation path 4c, the direction of the Y-axis direction of the main ventilation path 4a in the second embodiment is changed. Cooling air is taken into the main ventilation path 4a from the air intake port 411 of the air intake duct 41 in a direction of an arrow H (Figure 16) and discharged, through the same flow path in the battery module 3 as the flow path in the first embodiment, in a direction of an arrow I (Figure 16) from the exhaust port 421 of the exhaust duct 42 of the main ventilation path 4c.

Figure 17 is a diagram for explaining, for the same configuration of a battery pack as the configuration in the third embodiment, a temperature distribution in a battery module without a rule of a cross-sectional area ratio. Execution conditions of a simulation are the same as those in the first embodiment.

In the configuration of the battery pack 1C, when the cross-sectional area ratio of Expression (1) described above is not observed, as illustrated in Figure 17, the temperature of the batteries 31 in an area R3 near the air intake duct 41 and the exhaust duct 42 was relatively low. The temperature of the batteries 31 in an area R4 most distant in the Y-axis direction from the air intake duct 41 and the exhaust duct 42 was relatively high.

On the other hand, in the configuration of the battery pack 1C, by providing the bottom surface ventilation holes 322h and observing the cross-sectional area ratio of Expression (1) described above, as in the battery pack 1 in the first embodiment, it is possible to more efficiently cool the batteries 31 and variation of the temperatures of the batteries 31 is reduced.

### [Fourth Embodiment]

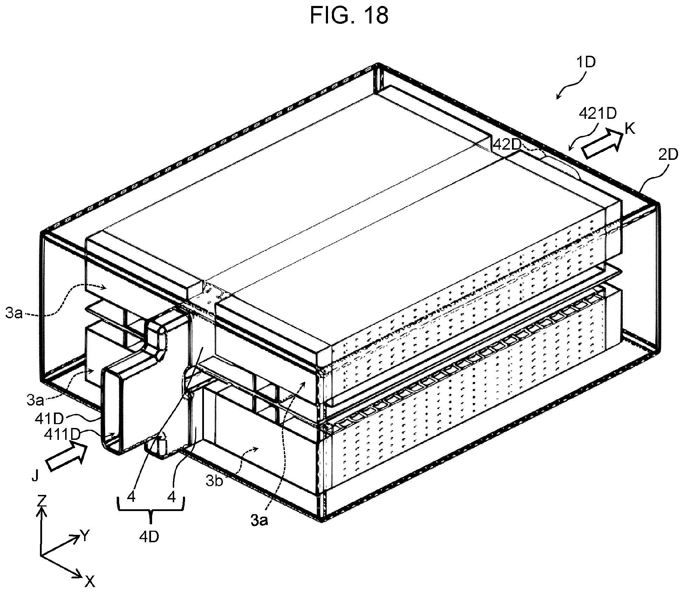

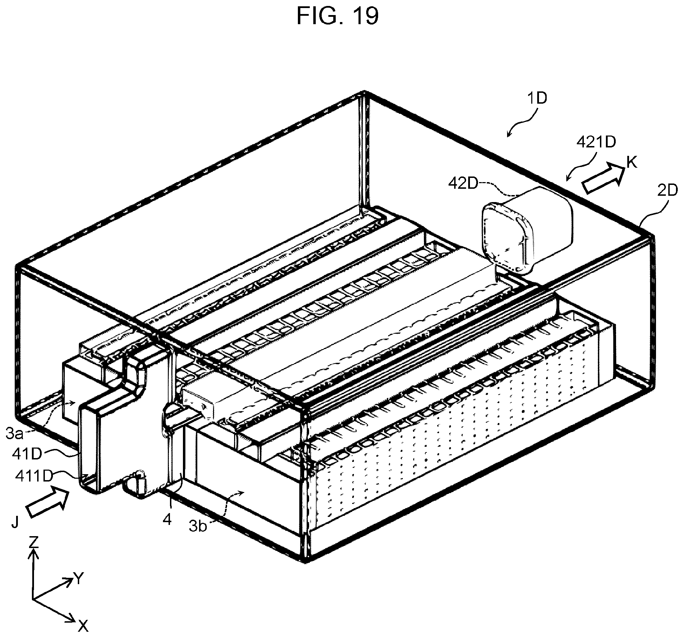

Figures 18 and 19 are perspective views illustrating the battery module 3 and the main ventilation path 4 of a battery pack 1D in a fourth embodiment. In the battery pack 1D, a configuration of four battery modules 3a and 3b and one main ventilation path 4D in which units of the battery modules 3a and 3b and the main ventilation path 4 in the first embodiment are stacked in two stages in the Z-axis direction is adopted. Note that the number of stackings of units is not limited to the two stages.

In the fourth embodiment, one main ventilation path 4D is configured by the main ventilation path 4 between the upper battery modules 3a and 3b in the Z-axis direction and the main ventilation path 4 between the lower battery modules 3a and 3b in the Z-axis direction. In Figure 19, illustration of units of the battery modules 3a and 3b and the main ventilation path 4 in the upper stage in the Z-axis direction in the battery pack 1D is omitted.

The battery pack 1D includes an air intake duct 41D and an exhaust duct 42D. The plurality of main ventilation paths 4 included in the stacked units explained above gather in an air intake port 411D of the air intake duct 41D and communicate with one another. Cooling air taken in from the air intake port 411D of the air intake duct 41D as indicated by an arrow J illustrated in Figures 18 and 19. The cooling air is discharged, through the main ventilation path 4 and the same flow paths in the battery modules 3a and 3b as the flow paths in the first embodiment, from an exhaust port 421D of the exhaust duct 42D as indicated by an arrow K in Figures 18 and 19.

The battery pack 1D requires more cooling air because the battery modules 3a and 3b are stacked. However, by providing the bottom surface ventilation holes 322h and observing the cross-sectional area ratio of Expression (1) described above, as in the battery pack 1 in the first embodiment, it is possible to more efficiently cool the batteries 31 and variation of the temperatures of the batteries 31 is reduced.

Batteries to which the embodiments are applied are not limited to secondary batteries such as a lithium ion battery. For example, the embodiments can also be applied to other secondary batteries such as a nickel hydrogen battery and a lead battery, a primary battery, and other batteries.

The above explanation is only an example. The technique according to the present disclosure is not limited to the configurations of the embodiments explained above at all and includes various modifications. For example, the embodiments have been explained in detail in order to clearly explain the technique according to the present disclosure and is not limited to embodiments including all the components explained above. Functions and components of other embodiments or modifications can be added to, deleted from, and replaced with the functions and the components in the embodiments as long as there is no contradiction.

### [Reference Signs List]

1, 1B, 1C, 1D: Battery pack, 2: Battery enclosure, 3, 3a, 3b: Battery module, 4, 4a, 4b, 4c, 4D: Main ventilation path, 31: Battery, 32: Battery holder, 32S: Holding member, 322a: First ventilation hole, 322b: Second ventilation hole, 326: Third ventilation hole, 328: Fourth ventilation hole, 330: Fifth ventilation hole, 322h: Bottom surface ventilation hole, 322L: Bottom surface ventilation hole group, 332U: Main surface ventilation hole group, 411, 411D: Air intake port, 221, 421, 421d: Exhaust port

## Claims

1. An assembled battery comprising:
a holding member configured to hold a plurality of batteries;
a stacked battery in which the plurality of batteries are stacked in a stacking direction via the holding member; and
a ventilation path adjacent to the stacked battery, extending in the stacking direction, and forming a flow path of cooling wind for cooling the plurality of batteries, wherein
the ventilation path includes an air intake port for taking the cooling wind into the ventilation path,
the holding member includes ventilation holes opened to the ventilation path side and a side opposite to the ventilation path to cause the cooling wind to flow from the ventilation path to the stacked battery, and
the ventilation holes include a bottom surface ventilation hole opened toward spaces formed between bottom surfaces of the plurality of batteries and a bottom surface of the holding member.

2. The assembled battery according to claim 1, further comprising an enclosure configured to house the stacked battery and the ventilation path, wherein
the ventilation path further includes an exhaust port for discharging the cooling wind that has cooled the plurality of batteries.

3. The assembled battery according to claim 1, wherein the holding member is configured by coupling a plurality of individual holding members, each of which holds the plurality of batteries.

4. The assembled battery according to claim 3, wherein
the plurality of individual holding members include recesses on end faces in the stacking direction, and
the bottom surface ventilation hole is formed such that the recess formed in a first individual holding member among the plurality of individual holding members and the recess formed in a second individual holding member among the plurality of individual holding members adjacent to the first individual holding member in the stacking direction face each other.

5. The assembled battery according to claim 1, wherein the ventilation path is disposed between a first stacked battery and a second stacked battery in the stacked battery.

6. The assembled battery according to claim 1, wherein
a plurality of units in which the ventilation path is disposed between a first stacked battery and a second stacked battery in the stacked battery are stacked, and
a plurality of the ventilation paths included in the stacked plurality of units gather in the air intake port and communicate with one another.

7. The assembled battery according to claim 2, wherein
the stacked battery is disposed between a first ventilation path and a second ventilation path in the ventilation path,
the first ventilation path includes the air intake port and the second ventilation path includes the exhaust port,
the first ventilation path and the second ventilation path form a flow path of the cooling wind leading to the second ventilation path from the first ventilation path through the stacked battery,
the ventilation hole of the first ventilation path cause the cooling wind to flow from the first ventilation path to the stacked battery, and
the ventilation hole of the second ventilation path causes the cooling wind to flow from the stacked battery to the first ventilation path.

8. An assembled battery comprising:
a holding member configured to hold a plurality of batteries;
a stacked battery in which the plurality of batteries are stacked in a stacking direction via the holding member; and
a ventilation path adjacent to the stacked battery, extending in the stacking direction, and forming a flow path of cooling wind for cooling the plurality of batteries, wherein
the ventilation path includes an air intake port for taking the cooling wind into the ventilation path,
the holding member includes ventilation holes opened to the ventilation path side and a side opposite to the ventilation path to cause the cooling wind to flow from the ventilation path to the stacked battery, and
a cross-sectional area of the ventilation path is larger than a total of opening areas of all of the ventilation holes.

9. The assembled battery according to any one of claims 1 to 8, wherein the ventilation holes include a main surface ventilation hole opened toward spaces formed among main surfaces of the stacked plurality of batteries.

10. The assembled battery according to claim 9, wherein the holding member includes a plurality of the main surface ventilation holes at equal intervals in a height direction of the battery.
